# EUROPEAN PATENT APPLICATION

(11) **EP 4 151 684 A1**
(43) Date of publication of application: **22.03.2023**
(21) Application number: 22020446.5
(22) Date of filing: 16.09.2022
(51) Int. Cl.: C08K 5/54, C09D 123/26, C09D 183/10, C09D 191/06, C09D 191/08

(54) **PREPARATIONS FOR INCREASING THE SLIPPERINESS OF SURFACES OF POLYMERIC MATERIALS AND COMPOSITES**

(30) Priority: 21.09.2021 CZ 202139196 U
(71) Applicant: Univerzita Pardubice, 530 09 Pardubice, Polabiny (CZ); Tischer, Petr, 468 41 Tanvald, Sumburk nad Desnou (CZ); Hons, Jaroslav, 466 04 Jablonec nad Nisou (CZ)
(72) Inventor: Tischer, Petr, 468 41 Tanvald, Sumburk nad Desnou (CZ); Hons, Jaroslav, 466 04 Jablonec nad Nisou (CZ); Veselý, David, Pardubice (CZ); Jambor, Roman, Pardubice (CZ); Novák, Miroslav, Holice (CZ)
(74) Representative: Kolator, Kamil

(57) **Abstract**

The technical solution replaces the hydrophobic properties of thin layers of fluorinated polymers with one or two basic components based on silanized paraffin (SP) and silanized polyethylene (SE). The essence of these components are compounds based on silicones and siloxanes, which are more easily hydrolysable and removable by the metabolic processes of living organisms. Both mentioned components can be used both separately and in mutual mixtures. These components can be applied both in the form of solutions, emulsions or suspensions, and also in the form of solid particles - powders. After applying the component to the substrate in the form of a solution, emulsion or suspension, a homogeneous layer will be formed only by spontaneous evaporation of the volatile component of the system.

## Description

### Field of technology

The technical solution concerns the composition of preparations used to prepare coatings that serve to increase the slipperiness of surfaces based on polymer materials and composites prepared from them.

### Current state of the art

In the recent past, for the purpose of increasing the surface slipperiness of polymeric materials, mixtures based on paraffins or modified stearates containing polymers containing fluorine in the structure were used. These are, for example, polytetrafluoroethylene (PTFE), - polyvinylidene fluoride (PVD), tetrafluoroethylene perfluoromethyl vinyl ether (MFA), - ethylene-tetrafluoroethylene copolymer (ETFE), polyethylene chlorotifluoroethylene (ECTFE), perfluoroalkoxyalkane (PFA), perfluorinated ethylene-propylene copolymer (FEP), polychlorotifluoroethylene (PCTFE) and their possible modifications. These fluorinated polymers are applied to preparations in micronized form. When applying the mentioned products, the surrounding environment is contaminated with microparticles and nanoparticles of fluorinated polymers. Of course, the surrounding environment is contaminated by them during the consumption of the surface-treated material and during its disposal. Particles of fluorinated polymers are stored in the insides of living organisms and, thanks to their high chemical resistance, are practically unremovable from the organism. Deposits of fluorinated polymers have been proven to cause cancerous growth. It follows from the above that fluorinated polymers have a very negative effect on the environment and human health. Currently, new, ecologically acceptable variants of preparations are being sought to increase the slipperiness of polymeric materials. One of them is the proposed technical solution that uses substances that do not have a negative effect on the environment. The proposed technical solution also responds to the increased demand for the mentioned materials, which is caused by new legislative regulations.

### The essence of the technical solution

The technical solution according to the utility model replaces the hydrophobic properties of thin layers of fluorinated polymers with one or two basic components based on silanized paraffin (SP) and silanized polyethylene (SE). The essence of these components are compounds based on silicones and siloxanes, which are more easily hydrolysable and removable by the metabolic processes of living organisms. Both mentioned components can be used both separately and in mutual mixtures. These components can be applied both in the form of solutions, emulsions or suspensions, and also in the form of solid particles - powders. After applying the component to the substrate in the form of a solution, emulsion or suspension, a homogeneous layer will be formed only by spontaneous evaporation of the volatile component of the system. In the case of using components in the form of powder, it is necessary to convert the components into a melt, when subsequent pouring achieves a consistent layer on the surface of the base material. In both cases, the formation of a protective coating is achieved on the substrate using homogeneous layers of the mentioned components. The thickness of the layers is in the range of 1-1000 µ m. Surfaces modified in this way not only show a significant improvement in hydrophobic properties, but they also do not become polluted.

The hydrophobic properties of the surface of the substrates are further improved by modifying the basic components with compounds based on organometallic compounds, which are used in very small concentrations (0.01 - 10%). The basis of the proposed mixtures are therefore the basic components (SP, SE and their mixtures), which are further modified by the addition of metallaboroxin compounds of non-transitional elements (AI, Ga, In, Si, Ge, Sn, Sb, Bi), or silanized nanoparticles of the oxides of these non-transitional metals , which show a sol-gel structure. The mixtures obtained are normally supplied in the form of solutions, emulsions or suspensions in lower hydrocarbons or as homogeneous mixtures in solid paraffins with a chain length of 15-60 carbons.

### Examples of implementing a technical solution

A mixture that improves the hydrophobic properties of substrates by forming a protective coating is described in the following examples.

### Example 1

Component A consists of SP, component B consists of SE, component C is an additive based on metallaboroxin compounds of non-transitional elements (Al, Ga, In, Si, Ge, Sn, Sb, Bi), component D is an additive based on silanized nanoparticles of oxides of these non-transitional metals (Al, Ga, In, Si, Ge, Sn, Sb, Bi) and component E are other additives (carbon black, stearamides, ZnO, Al ₂ O ₃, BN, graphite, ZrO ₂, VO ₂, TiO ₂, paraffins, etc.), which are or are not silanized , when this percentage addition is made from the point of view of adjusting other properties of the preparations, or the surface of the substrates.

### Examples of variants of mixtures based on one main component

### Example 2

Component A: 90% by weight of silanized paraffin (SP)
Component C: 9% by weight of additives based on metallaboroxin compounds
Component D: 0.6% by weight of additive based on silanized oxide nanoparticles
Component E: 0.4% by weight of other additives

### Example 3

Component B: 95% by weight of silanized polyethylene (SE)
Component C: 2.5% by weight of additives based on metallaboroxin compounds
Component D: 2% by weight of additive based on silanized oxide nanoparticles
Component E: 0.5% by weight of other additives

### Examples of mixture variants based on two main components (SP + SE)

### Example 4

Component A: 45% by weight of silanized polyethylene (SE)
Component B: 45% by weight of silanized paraffin (SP)
Component C: 5% by weight of additives based on metallaboroxin compounds
Component D: 2% by weight of additive based on silanized oxide nanoparticles
Component E: 3% by weight of other additives

The resulting mixture is homogeneously dissolved, emulsified or suspended in lower hydrocarbons and the prepared solution, emulsion or suspension is applied to the surface of the substrate using a sponge and allowed to dry. After cooling, the surface is brushed and polished with a microfiber cloth, or
- the resulting mixture is homogeneously mixed with solid paraffin with a chain length of 15 - 60 carbons, the resulting powder is applied to the surface of the substrate, where the mixture is melted at 120 - 130 °C and merged into a homogeneous layer. After cooling, the surface is brushed and polished with a microfiber cloth, or
- the obtained mixture of components in powder form is only homogenized, the resulting powder is applied to the surface of the substrate, where the mixture melts at 120 - 160 °C and merges into a homogeneous layer. After cooling, the surface is brushed and polished with a microfiber cloth, or
- the resulting mixture is melted, the melt is poured into a mold and allowed to cool. A weak layer is formed on the surface of the plastic with the help of friction, which is ironed at a temperature of 120-160 °C, then brushed and polished with a microfiber cloth.

### Industrial applicability:

The mixture can be used to increase the slipperiness of the surface of plastic plates, e.g. in filling machines for glass containers, or on the surfaces of various sports equipment.

## Claims

1. Preparations for increasing the slipperiness of the surfaces of polymeric materials and composites, **characterized by the fact that the** preparation consists of one or two basic components, based on silanized paraffin (SP) and/or on the basis of silanized polyethylene in any relative proportions.

2. Preparations for increasing the slipperiness of the surfaces of polymer materials and composites according to claim 1, **characterized in that** up to 100% by mass the preparation according to claim 1 is supplemented with additives based on metalboroxine compounds and/or additives based on silanized oxide nanoparticles and/or organometallic compounds based on metalboroxine compounds of non-transitional elements (Al, Ga, In, Si, Ge, Sn, Sb, Bi), and/or additives such as carbon black, paraffins, graphite and oxides of some metals in the form of powders, such as ZnO, Al ₂ O ₃, VO ₂, TiO ₂, , ZrO ₂ or nitrides, whether covalent, such as B, AI, Ga, In and TI, or metal nitrides (Zr,V,Ti) which are or are not silanized and/or by pure or silanized stearamide.

3. Preparations for increasing the slipperiness of the surfaces of polymeric materials and composites according to one of the preceding claims, **characterized in that the** preparations are produced in the form of solutions or emulsions or suspensions, as well as in the form of solid particles - powders.
